Europäisches Patentamt

European Patent Office

Office européen des brevets

(11) Publication number: **0 379 318**
**A1**

## (12) EUROPEAN PATENT APPLICATION

(21) Application number: **90300387.9**

(22) Date of filing: **12.01.90**

(51) Int. Cl.⁵: **G01C 19/66**

(30) Priority: **14.01.89 GB 8900799**

(43) Date of publication of application:
**25.07.90 Bulletin 90/30**

(84) Designated Contracting States:
**DE FR GB IT SE**

(71) Applicant: **BRITISH AEROSPACE PLC**
**11 Strand**
**London WC2N 5JT(GB)**

(72) Inventor: **Simms, G. J. c/o Dynamics Division**
**British Aerospace PLC, Downshire Way**
**Bracknell, Berkshire RG12 1QI(GB)**
Inventor: **Lloyd, M.L. c/o Dynamics Division**
**British Aerospace PLC, Downshire Way**
**Bracknell, Berkshire RG12 1QI(GB)**

(74) Representative: **Dowler, Edward Charles et al**
**British Aerospace plc Corporate IPR**
**Department, Headquarters P.O.Box 87**
**Building Q191 Royal Aerospace**
**Establishment**
**Farnborough Hants GU14 6YU(GB)**

(54) Modular rig aperturing.

(57) A ring laser gyroscope whose body is formed of modules which are assembled prior to use has laser beam aperturing means provided in each lasing path, the aperturing means being adjustable during assembly and then bonded into a selected position to allow only the $TEM_{oo}$ mode of each beam to be propagated.

Fig.1.

EP 0 379 318 A1

## Adjustable Aperture for Modular Ring Laser Gyroscope

Present designs of ring laser gyroscopes have their bodies formed from a single block of dielectric material having a low coefficient of thermal expansion, for example Zerodur (Registered Trade Mark). Bores are drilled in the monoblock (as the block is known) to define each limb of the lasing cavity as well as extra bores leading to electrodes to enable DC excitation of the gas in the lasing capacity. Each lasing cavity has a lasing path, the lasing path being polygonal with mirrors at each corner. The lasing path forms a closed loop within which two laser beams travel in opposite directions.

Laser light beam propagates within the cavity as a standing-wave configuration along its length. However, it may also sustain a standing-wave across its width thereby creating transverse modes. These are known as $TEM_{mn}$ modes (Transverse Electric and Magnetic). The m and n subscripts are the integer number of transverse nodal lines in the orthogonal directions across the beam width. The lowest order or $TEM_{oo}$ transverse mode is completely spatially coherent and therefore will produce optimum laser gyro performance. To obtain pure $TEM_{oo}$ operation the laser beam passes through an aperture to restrict the diameter of the beam and preventing other transverse modes from propagating.

In present designs the bores, or a portion of the bores forming the laser cavities are drilled sufficiently narrowly to form an aperture and thereby ensuring that the $TEM_{oo}$ mode beam propagates in each direction in the lasing path. This demands great accuracy during drilling and in subsequent positioning of the mirrors.

In present designs the optical alignment of a laser gyro is achieved by adjusting the mirror positions to cause the laser beam path to move with respect to the fixed aperture. The position of the laser beam path is very sensitive to small mirror adjustments thereby making perfect alignment difficult to achieve.

Optical alignment of a triaxial laser gyroscope can be more difficult to achieve because each mirror is shared between adjacent lasing axes. As each mirror aligns the laser beam to the aperture of one of the lasing axis the laser beam can be misaligned in the adjacent axis.

This results with the mirrors being positioned to compromise the alignment requirements of the adjacent axes. Therefore, perfect alignment is rarely achieved.

It is now proposed to produce what was previously known as the monoblock body in modular form ie: to make several component parts which are assembled to form the body. This proposal is discussed with reference to our European patent application 88310005.9 It has many advantages, not the least of which is that parts which were hitherto inaccessible are now readily accessible during manufacture. It is thus an objective of the present invention to provide a ring laser gyroscope in which adjustable apertures can be provided whereby, even with relaxed positioning of the mirrors and increased size of bores, only the chosen $TEM_{oo}$ is allowed to propagate in each lasing path.

This can be achieved because the apertures are adjusted following the mirror alignment rather than vice-versa.

According to the present invention, a ring laser gyroscope whose body is formed of modules which are assembled prior to use, includes for each lasing path, aperture support means, and aperturing means adjustably carried thereby the aperturing laser beam means having an orifice of a size chosen to allow passage of one transverse mode in each direction through it, the arrangement being such that the orifice can be positioned during assembly of the ring laser gyroscope and subsequently held permanently in that position so that in use only one transverse mode is allowed to pass through it.

Preferably, the aperture support means comprises a shoulder having a large cutaway or hole formed therethrough, and the aperturing means comprises a plate with an orifice formed in it, the plate being capable of being permanently bonded in a chosen position on the shoulder. Preferably the plate is in the form of a disc.

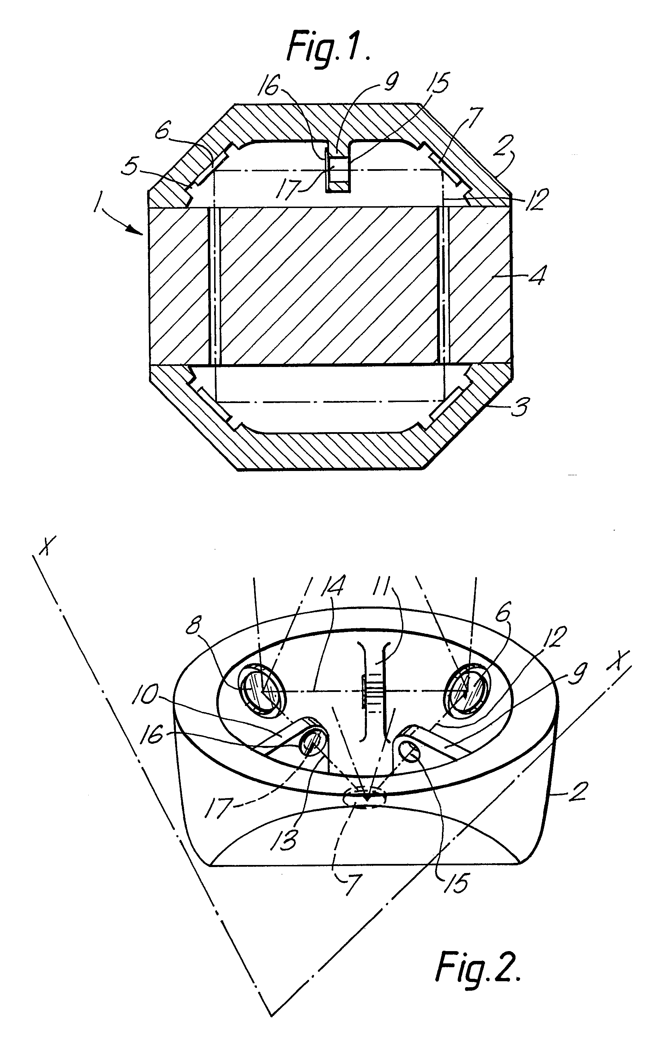

One embodiment of the invention is illustrated by way of example with reference to the accompanying drawings in which Figure 1 is a cross sectional view of a modular ring laser gyroscope body - in this example a tri-axis instrument in which the mirrors are shared by more than one lasing path, and Figure 2 is an isometric view of a mirror module forming part of the gyroscope body of Figure 1.

The cross section of Figure 1 is in the plane of one lasing path eg: that referenced X-X of Figure 2.

A tri-axis ring laser gyroscope 1 comprises two mirror modules 2 and 3 and a gain bore module 4 lying between them. The modules are assembled in a sealed gas tight manner during manufacture. They are formed of Zerodur, which is a type of glass, a ceramic material, a glass-ceramic, or even of a plastics material.

Each mirror module 2,3 is formed with an internal surface 5 on which is mounted three mirrors 6,7,8. The module 2 is further provided with radially inwardly directed shoulders 9,10,11 extending from the inner part-spherical surface to lie at right angles across each lasing path each respectively shown in part at 12,13,14.

Each lasing path is rectangular and lies orthogonally to the others. Naturally each path is completed by the mirrors in that module referenced 3. An example, ie: path 12 is shown complete in Figure 1.

Each shoulder has a cutaway region 15, either a slot or a hole of sufficient size to allow a multi-transverse mode laser beam to pass there through with clearance. Each shoulder is provided with aperturing means 16 comprising a disc with an orifice 17 formed in it, the size of the orifice being such that just the TEM$_{oo}$ mode propagates in each of the counter-rotating beams is allowed to pass through instead of multi-transverse modes. Sufficient adjustment is provided by the size of the disc 16 and the cutaway region 15 to allow a selected pair of transverse mode to be passed whilst the remainder are blocked.

Once adjusted, using a bench optical system developed for the purpose, the discs 16 are set permanently in position by an epoxy resin - preferably one with ultra-violet light curing characteristics.

The apertures are aligned and secured, following the mirror alignment. Therefore, as each aperture is dedicated to only one of the lasing axes, perfect optical alignment is always possible.

If the mirror modules are made by a casting or moulding process then the shoulders 9,10,11 can be integrally formed during that process.

A more detailed discussion of the standing waves within laser light beams is contained on pages 483-485 of Optics by Hecht and Zajac from Adelphi University and published by Addison-Wesley.

## Claims

1. A ring laser gyroscope, whose body is formed of modules which are assembled prior to use, including for each lasing path, aperture support means, and aperturing means carried thereby, the aperturing means having an orifice of a size chosen to allow passage of one laser beam transverse mode in each direction through it, the arrangement being such that the orifice can be positioned during assembly of the ring laser gyroscope and subsequently held permanently in that position so that in use only one transverse mode is allowed to pass through it.

2. A ring laser gyroscope according to claim 1 wherein the aperture support means comprises a shoulder having a large cutaway or hole formed therethrough and the aperturing means comprises a plate with an orifice formed in it, the plate being capable of being permanently bonded in a chosen position on the shoulder.

3. A ring laser gyroscope according to claim 2 wherein the plate is in the form of a disc.

4. A ring laser gyroscope substantially as described with reference to the accompanying drawings.

Fig.1.

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 705 398 (LIM et al.)<br>* Figures 1,2; column 3, lines 56-62 *<br>--- | 1 | G 01 C 19/66 |
| A,D<br>P | EP-A-0 320 101 (BRITISH AEROSPACE)<br>* Whole document *<br>--- | 1 | |
| A | FR-A-2 030 688 (HONEYWELL)<br>* Whole document *<br>--- | 1 | |
| A | FR-A-2 548 777 (LITTON)<br>* Figures 2-4; abstract *<br>----- | 1 | |
| | | | TECHNICAL FIELDS SEARCHED (Int. Cl.5)<br><br>G 01 C |

The present search report has been drawn up for all claims

| Place of search | Date of completion of the search | Examiner |
|---|---|---|
| THE HAGUE | 18-04-1990 | KOLBE W.H. |